(19) Europäisches Patentamt
European Patent Office
Office européen des brevets

(11) **EP 4 749 725 A1**

## (12) EUROPEAN PATENT APPLICATION
published in accordance with Art. 153(4) EPC

(43) Date of publication:
**27.05.2026 Bulletin 2026/22**

(21) Application number: **24865098.8**

(22) Date of filing: **30.07.2024**

(51) International Patent Classification (IPC):
**H01M 8/04** (2016.01)        **H01M 8/04313** (2016.01)
**F17C 13/02** (2006.01)

(52) Cooperative Patent Classification (CPC):
**H01M 8/04; H01M 8/04313; F17C 13/02;**
**Y02E 60/50**

(86) International application number:
**PCT/JP2024/027071**

(87) International publication number:
**WO 2025/057591 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.09.2023 JP 2023148250**

(71) Applicant: **Panasonic Intellectual Property
Management Co., Ltd.
Kadoma-shi, Osaka 571-0057 (JP)**

(72) Inventors:
• **ISE, Takehiko
  Kadoma-shi, Osaka 571-0057 (JP)**
• **KANEKO, Yasushi
  Kadoma-shi, Osaka 571-0057 (JP)**
• **TAGUCHI, Yoshifumi
  Kadoma-shi, Osaka 571-0057 (JP)**
• **TANAKA, Yoshikazu
  Kadoma-shi, Osaka 571-0057 (JP)**
• **YOSHIHARA, Yasumichi
  Kadoma-shi, Osaka 571-0057 (JP)**
• **FUJII, Tsutomu
  Kadoma-shi, Osaka 571-0057 (JP)**
• **ABE, Miki
  Kadoma-shi, Osaka 571-0057 (JP)**

(74) Representative: **Grünecker Patent- und
Rechtsanwälte
PartG mbB
Leopoldstraße 4
80802 München (DE)**

(54) **METHOD FOR PREDICTING RESIDUAL AMOUNT OF HYDROGEN TANK, DEVICE FOR PREDICTING RESIDUAL AMOUNT OF HYDROGEN TANK, AND POWER GENERATION SYSTEM**

(57)     According to the present disclosure, a remaining amount estimation method for a hydrogen tank used in a fuel cell device including at least one fuel cell unit includes the step of estimating a time when the remaining amount of hydrogen in a hydrogen tank falls to a first threshold value or below based on a used amount of hydrogen in the hydrogen tank during a first time period of a plurality of consecutive days and the step of notifying a display device of the time. When a used amount of hydrogen in the hydrogen tank during a second time period of a plurality of consecutive days within the first time period is less than or equal to a second threshold value, the time is estimated based on a used amount of hydrogen in the hydrogen tank during the first time period excluding the second time period.

**(Cont. next page)**

# FIG. 3

```
                            ╱────────────────────╲
                          ╱    USED AMOUNT          ╲ ─── S1
                        ╱    OF HYDROGEN IN HYDROGEN   ╲
                      ╱   TANK DURING PERIOD B OF PLURALITY ╲
                      ╲ OF DAYS WITHIN PERIOD A OF PLURALITY ╱  No
                        ╲    OF DAYS ≤ THRESHOLD       ╱
                          ╲      VALUE SB?         ╱
                            ╲──────────────────╱
```

Yes    S2                                              S4

| ESTIMATE TIME WHEN REMAINING AMOUNT OF HYDROGEN IN HYDROGEN TANK ≤ THRESHOLD VALUE SA BASED ON USED AMOUNT OF HYDROGEN IN HYDROGEN TANK DURING TIME PERIOD A EXCLUDING TIME PERIOD B | ESTIMATE TIME WHEN REMAINING AMOUNT OF HYDROGEN IN HYDROGEN TANK ≤ THRESHOLD VALUE SA BASED ON USED AMOUNT OF HYDROGEN IN HYDROGEN TANK DURING TIME PERIOD A |
|---|---|
| **S3** | **S5** |
| DISPLAY TIME OBTAINED IN S2 ON DISPLAY DEVICE | DISPLAY TIME OBTAINED IN S4 ON DISPLAY DEVICE |

## Description

Technical Field

The present disclosure relates to a remaining amount estimation method for a hydrogen tank, a remaining amount estimation device for a hydrogen tank, and a power generation system.

Background Art

PTL 1 discloses a device for generating an operation plan for a hydrogen production system including a hydrogen generation device. The hydrogen production system includes a demand prediction unit that generates predicted demand levels for a plurality of types of hydrogen, each having a different environmental burden in production thereof, over a target period of the operation plan and an operation planning unit that generates an operation plan for generating the plurality of types of hydrogen having different environmental burdens in production thereof by using the hydrogen generation device on the basis of the respective predicted hydrogen demands for the plurality of types of hydrogen.

Citation List

Patent Literature

PTL 1: International Publication No. 2020/203520

Summary of Invention

Technical Problem

The present disclosure provides, as an example, a remaining amount estimation method for a hydrogen tank, a remaining amount estimation device for a hydrogen tank, and a power generation system that can estimate the time when the remaining amount of hydrogen in the hydrogen tank used in a fuel cell device falls to a predetermined amount or below more accurately than existing ones.

Solution to Problem

To solve the above problem, according to an aspect of the present disclosure, a remaining amount estimation method for a hydrogen tank used in a fuel cell device including at least one fuel cell unit includes estimating a time when the remaining amount of hydrogen in a hydrogen tank falls to a first threshold value or below based on a used amount of hydrogen in the hydrogen tank during a first time period of a plurality of consecutive days and notifying a display device of the time. When a used amount of hydrogen in the hydrogen tank during a second time period of a plurality of consecutive days within the first time period is less than or equal to a second threshold value, the time is estimated based on a used amount of hydrogen in the hydrogen tank during the first time period excluding the second time period.
According to another aspect of the present disclosure, a remaining amount estimation device for a hydrogen tank used in a fuel cell device including at least one fuel cell unit includes a controller that estimates a time when the remaining amount of hydrogen in a hydrogen tank falls to a first threshold value or below based on a used amount of hydrogen in the hydrogen tank during a first time period of a plurality of consecutive days and a communicator that is controlled by the controller and that notifies a display device of the time. When a used amount of hydrogen in the hydrogen tank during a second time period of a plurality of consecutive days within the first time period is less than or equal to a second threshold value, the controller estimates the time based on a used amount of hydrogen in the hydrogen tank during the first time period excluding the second time period.
According to still another aspect of the present disclosure, a power generation system includes a fuel cell device including at least one fuel cell unit and the remaining amount estimation device for a hydrogen tank described above.

Advantageous Effects of Invention

According to the aspects of the present disclosure, the remaining amount estimation method for a hydrogen tank, the remaining amount estimation device for a hydrogen tank, and the power generation system can provide the effect of estimating the time when the remaining amount of hydrogen in a hydrogen tank used in a fuel cell device falls to a predetermined amount or below more accurately than existing ones.

Brief Description of Drawings

[Fig. 1] Fig. 1 illustrates an example of a power generation system according to a first embodiment.
[Fig. 2A] Fig. 2A illustrates an example of a sensor for calculating the remaining amount of hydrogen in a hydrogen tank.
[Fig. 2B] Fig. 2B illustrates an example of a sensor for calculating the remaining amount of hydrogen in a hydrogen tank.
[Fig. 2C] Fig. 2C illustrates an example of a sensor for calculating the remaining amount of hydrogen in a hydrogen tank.
[Fig. 3] Fig. 3 is a flowchart illustrating an example of the operation performed by a remaining amount estimation device for a hydrogen tank (a remaining amount estimation method for a hydrogen tank) according to the first embodiment.
[Fig. 4] Fig. 4 is a flowchart illustrating an example of the operation performed by a remaining amount estimation device for a hydrogen tank (a remaining amount estimation method for a hydrogen tank) according to the first example of the first embodiment.
[Fig. 5] Fig. 5 illustrates an example of a power generation system according to a second embodiment.

Description of Embodiments

The present disclosers have studied estimation of the time when the remaining amount of hydrogen in a hydrogen tank used in the fuel cell device falls to a predetermined threshold value or below. As a result of the study, the present inventors have found that if the data acquired in several consecutive days in which the hydrogen usage of the hydrogen tank is irregularly lower than the normal hydrogen usage is excluded from the calculation of hydrogen usage of the hydrogen tank, the hydrogen usage can be calculated more properly than when the data is included. As such, the present disclosers have conceived of an aspect of the present disclosure described below.

That is, a first aspect of the present disclosure provides a remaining amount estimation method for a hydrogen tank used in a fuel cell device including at least one fuel cell unit. The method includes the step of estimating the time when the remaining amount of hydrogen in the hydrogen tank falls to a first threshold value or below based on the used amount of hydrogen in the hydrogen tank during a first time period of a plurality of consecutive days and the step of notifying a display device of the time. If the used amount of hydrogen in the hydrogen tank during a second time period of a plurality of consecutive days within the first time period is less than or equal to a second threshold value, the above-described time is estimated based on the used amount of hydrogen in the hydrogen tank during the first time period excluding the second time period.

According to the above description, the remaining amount estimation method for a hydrogen tank of the present aspect can estimate the time when the remaining amount of hydrogen in a hydrogen tank used in a fuel cell device falls to a first threshold value or below more accurately than existing methods.

More specifically, excluding, from the calculation of hydrogen usage, data obtained during the second time period during which the hydrogen usage of the hydrogen tank is irregularly low as compared with normal hydrogen usage over a plurality of days can result in a more appropriate calculation of hydrogen usage than when the data is not excluded. Therefore, according to the remaining amount estimation method for a hydrogen tank of the present aspect, by estimating the time when the remaining amount of hydrogen in the hydrogen tank falls to the first threshold value or below based on the used amount of hydrogen in the hydrogen tank during the first time period excluding the second time period, the accuracy of the estimation can be improved as compared with the case where such excluded period is not provided in calculation of hydrogen usage. This allows the user to refill the hydrogen tank with hydrogen or replace the hydrogen tank in use with a new hydrogen tank in a timely manner.

In addition, according to the remaining amount estimation method for a hydrogen tank of the present aspect, by setting each of the first time period and the second time period to a plurality of consecutive days, estimation of the time when the remaining amount of hydrogen in a hydrogen tank falls to the first threshold value or below is less affected by fluctuation in hydrogen usage in daily activities. For example, in general, hydrogen usage on a specific day, such as a holiday, is lower than that on a weekday. According to the remaining amount estimation method for a hydrogen tank of the present aspect, by setting the first time period and the second time period in the above-described manner, the influence of fluctuation in daily hydrogen usage is reduced in the estimation of the time when the remaining amount of hydrogen in a hydrogen tank falls to the first threshold value or below.

According to a remaining amount estimation method for a hydrogen tank of a second aspect of the present disclosure, when the first time period is the same as the second time period in the remaining amount estimation method for a hydrogen tank of the first aspect, it is not needed to update the time when the remaining amount of hydrogen in a hydrogen tank falls to the first threshold value or below.

The statement "the first time period and the second time period are the same" herein means that the hydrogen usage of the hydrogen tank is irregularly less than the normal hydrogen usage during the entire first time period. Therefore, according to the remaining amount estimation method for a hydrogen tank of the present aspect, by not updating the time when the remaining amount of hydrogen in a hydrogen tank used in a fuel cell device falls to the first threshold value or below if the first time period and the second time period are the same, the time estimating operation can be performed more efficiently.

According to a remaining amount estimation method for a hydrogen tank of a third aspect of the present disclosure, in the remaining amount estimation method for a hydrogen tank of the first aspect or second aspect, the time when the remaining amount of hydrogen in a hydrogen tank falls to the first threshold value or below may be estimated based on the value obtained by dividing the difference between the remaining amount of hydrogen in the hydrogen tank and the first threshold value by the average daily amount of hydrogen used during the first time period excluding the second time period.

According to the above description, by estimating the time when the remaining amount of hydrogen in a hydrogen tank falls to the first threshold value or below based on the value obtained by dividing the difference between the remaining amount of hydrogen in the hydrogen tank and the first threshold value by the average daily amount of hydrogen used during the first time period excluding the second time period, the remaining amount estimation method for a hydrogen tank of the present aspect can improve the accuracy of the estimation as compared with the case where no such excluded time period is applied to the calculation of hydrogen usage.

According to a remaining amount estimation method for a hydrogen tank of a fourth aspect of the present disclosure, in the remaining amount estimation method for a hydrogen tank of any one of the first to third aspects, the first time period may be one or more weeks, and the second time period may be a week (or weeks) less than or equal to the first time period.

According to the above description, in the remaining amount estimation method for a hydrogen tank of the present aspect, by setting the first time period and the second time period to one or more weeks and a week (or weeks) less than or equal to the first time period, respectively, estimation of the time when the remaining amount of hydrogen in a hydrogen tank falls to the first threshold value or below is less affected by fluctuations in the hydrogen usage in daily activities. For example, in general, the amount of hydrogen used during a specific time period in a week (for example, a weekend, such as Saturday and Sunday) is lower than that during a weekday. According to the remaining amount estimation method for a hydrogen tank of the present aspect, by setting the first time period and the second time period as described above, the influence of fluctuations in daily hydrogen usage that are repeated weekly can be reduced in estimation of the time when the remaining amount of hydrogen in a hydrogen tank falls to the first threshold value or below.

According to a fifth aspect of the present disclosure, a remaining amount estimation device for a hydrogen tank used in a fuel cell device including at least one fuel cell unit includes a controller that estimates a time when the remaining amount of hydrogen in the hydrogen tank falls to a first threshold value or below based on a used amount of hydrogen in the hydrogen tank during a first time period of a plurality of consecutive days and a communicator that is controlled by the controller and that notifies a display device of the time. When a used amount of hydrogen in the hydrogen tank during a second time period of a plurality of consecutive days within the first time period is less than or equal to a second threshold value, the controller estimates the time based on a used amount of hydrogen in the hydrogen tank during the first time period excluding the second time period.

According to the above description, the remaining amount estimation device for a hydrogen tank of the present aspect can estimate the time when the remaining amount of hydrogen in a hydrogen tank used in the fuel cell device falls to the first threshold value or below more accurately than existing ones. Detailed description of the operation and effects of the remaining amount estimation device for a hydrogen tank of the present aspect is the same as that for the remaining amount estimation method for a hydrogen tank of the first aspect and, therefore, the detailed description is omitted.

A power generation system according to a sixth aspect of the present disclosure includes a fuel cell device that includes at least one fuel cell unit and the remaining amount estimation device for a hydrogen tank according to the fifth aspect.

According to the above description, the power generation system of the present aspect can estimate the time when the remaining amount of hydrogen in a hydrogen tank used in a fuel cell device falls to a first threshold value or below more accurately than existing ones. Detailed description of the operation and effects of the power generation system of the present aspect is the same as that for the remaining amount estimation method for a hydrogen tank of the first aspect and, therefore, the detailed description is omitted.

Particular examples according to the above-described aspects of the present disclosure are described below with reference to the accompanying drawings. The particular examples described below are all examples according to the above-described aspects of the present disclosure. Therefore, a shape, a value, a constituent element, the positions and the connection form of the constituent elements, and the like described below shall not be construed as limiting the scope of the claims, unless otherwise stated in the claims.

In addition, among the constituent elements described below, the constituent element that does not appear in an independent claim, which has the broadest scope of the present disclosure, is described as an optional constituent element. In addition, in the drawings, those identified by the same reference numeral may be omitted from the description. For ease of understanding of the drawings, the constituent elements are schematically illustrated and may not be exact representations in terms of shape and dimensional ratio.

Furthermore, the order of the processes may be rearranged as necessary, or a well known process may be added.

(First Embodiment)

[Device Configuration]

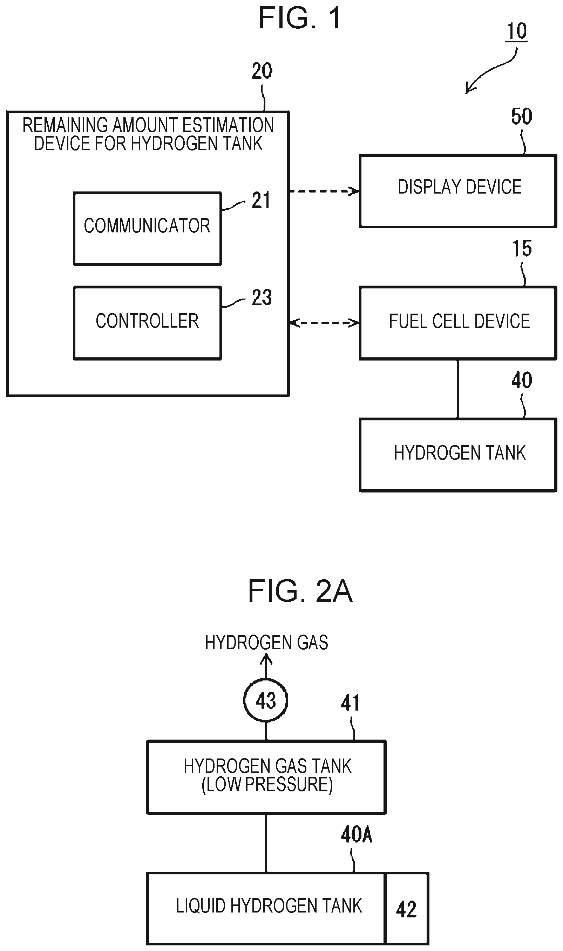

Fig. 1 illustrates an example of a power generation system according to the first embodiment.

As illustrated in Fig. 1, a power generation system 10 includes a fuel cell device 15 and a remaining amount estimation device 20 for a hydrogen tank 40 used in the fuel cell device 15.

The fuel cell device 15 includes at least one fuel cell unit that generates electric power by using hydrogen from a hydrogen tank 40. Thus, the fuel cell device 15 may include a single fuel cell unit or a plurality of fuel cell units. In the latter case, the power generation system 10 may be, for example, a system that supplies a large amount of power to an electric power system. That is, in the latter case, the power generation system 10 include a fuel cell unit group consisting of a plurality of fuel cell units including fuel cell stacks, and the fuel cell device 15 correspond to each of the groups obtained by dividing the fuel cell unit group. The detailed configuration of the power generation system 10 is described in a second embodiment.

As illustrated in Fig. 1, the remaining amount estimation device 20 for the hydrogen tank 40 includes a communicator 21 and a controller 23.

The controller 23 estimates the time when the remaining amount of hydrogen in the hydrogen tank 40 falls to a threshold value SA or below based on the used amount of hydrogen in the hydrogen tank 40 during a time period A of a plurality of days. When the used amount of hydrogen in the hydrogen tank during a time period B of a plurality of days within the time period A is less than or equal to a threshold value SB, the controller 23 estimates the time when the remaining amount of hydrogen in the hydrogen tank 40 falls to the threshold value SA or below based on the used amount of hydrogen in the hydrogen tank during the time period A excluding the time period B. A particular example of a method for calculating the "time when the remaining amount of hydrogen in the hydrogen tank 40 falls to the threshold value SA or below" is described in a first example.

The "plurality of days" of the "time period A" may be several days or an appropriate number of days that are longer than the several days and that are selected from one week (seven days) to several months. For example, the "period A" may be weeks selected from about two weeks to about one month (four weeks).

The "plurality of days" of the "time period B" may be a several days or an appropriate number of days that are longer than the several days and that are selected from one week (seven days) to one month. For example, the "time period B" may be one week (seven days), but needs to be at least shorter than or equal to the "time period A".

The "threshold value SA" is an appropriate amount of hydrogen that is determined in advance by a user and corresponds to a reference value used to prompt the user to refill the hydrogen tank 40 with hydrogen or exchange the hydrogen tank 40 in use with a new one when the remaining amount of hydrogen in the hydrogen tank 40 becomes low. The "threshold value SA" may be set to, for example, an amount corresponding to about 20 % of the amount of hydrogen fully stored in the hydrogen tank 40. However, the "threshold value SA" is not limited thereto.

The "threshold value SB" is an appropriate amount of hydrogen that is determined in advance by the user and corresponds to a reference value determined on the assumption of a situation in which the hydrogen usage of the hydrogen tank 40 during the time period B is irregularly low as compared with the normal hydrogen usage. The "threshold value SB" may be set to, for example, an amount corresponding to about 10 % of the amount of hydrogen fully stored in the hydrogen tank 40. However, the "threshold value SB" is not limited thereto.

The "situation in which the hydrogen usage of the hydrogen tank during the time period B is irregularly low as compared with the normal hydrogen usage" occurs due to a variety of factors. For example, the above situation may occur due to some unusual action taken by the user. The above situation may also occur, for example, due to the hydrogen usage of the hydrogen tank 40 not being measured properly. The above situation may also occur, for example, due to the inability of the power generation system 10 to generate electric power properly.

The above-described situations do not include a case where the operation performed by the power generation system 10 is regularly suspended for a plurality of days, because, as described above, the situation occurs when the hydrogen usage is irregularly low as compared with the normal hydrogen usage. For example, the case where the operation performed by the power generation system 10 is suspended every Saturday and Sunday is not included in the above-described situation. In such a case, the time period B is set to a period that includes the suspension period and that is longer than the suspension period (for example, one week), and the threshold value SB is set to determine whether the above-described situation occurs with respect to the time period B.

Any controller having a control function can be used as the controller 23. The controller 23 includes an arithmetic processing unit (not illustrated) and a storage unit that stores a control program. The arithmetic processing unit reads and executes the control program stored in the storage unit and, thus, performs predetermined control in the controller 23. For example, a microprocessor is used as the arithmetic processing unit. For example, a memory is used as the storage unit. The controller 23 may directly control the operation including the output of the fuel cell unit in the fuel cell device 15. If the fuel cell unit includes a control unit (not illustrated) that controls the operation performed by the fuel cell unit, the controller 23 may indirectly control the operation including the output of the fuel cell unit in the fuel cell device 15 via the control unit.

The communicator 21 is a transmitter that, under the control of the controller 23, notifies a display device 50 of information regarding when the remaining amount of hydrogen in the hydrogen tank 40 falls to the threshold value SA or below. For example, a user information terminal that receives a service of supplying electric power generated by the power generation system 10 can be the display device 50. However, the display device 50 is not limited thereto.

The remaining amount of hydrogen in the hydrogen tank 40 may be measured by, for example, a suitable sensor. The arithmetic processing unit of the controller 23 performs the measurement at a predetermined time intervals by using the sensor, and the measurement data of the sensor is sequentially stored in the storage unit of the controller 23. The "predetermined time interval" may be, but not limited to, about 30 seconds, for example.

For example, as illustrated in Fig. 2A, in some cases, a liquid hydrogen tank 40A for hydrogen refill and a hydrogen gas tank 41 for storing, in the form of low-pressure hydrogen gas, the liquid hydrogen in the liquid hydrogen tank 40A are provided as a hydrogen supply source for the fuel cell device 15. In this case, since the liquid hydrogen tank 40A corresponds to a "hydrogen tank" of the present disclosure, the remaining amount of hydrogen in the liquid hydrogen tank 40A may be calculated by the controller 23 from, for example, the measurement data of a liquid level sensor 42 provided in the liquid hydrogen tank 40A. Alternatively, the remaining amount of hydrogen in the liquid hydrogen tank 40A may be calculated by the controller 23 from the measurement data of a flowmeter 43 provided in a hydrogen gas path for supplying hydrogen gas from the hydrogen gas tank 41 to the fuel cell device 15. The measurement data of the liquid level sensor 42 or the flowmeter 43 may be transmitted to the controller 23 via a controller (not illustrated) provided in the fuel cell device 15 or may be transmitted directly to the controller 23. The controller (not illustrated) provided in the fuel cell device 15 corresponds to a control unit 30A or the like described below.

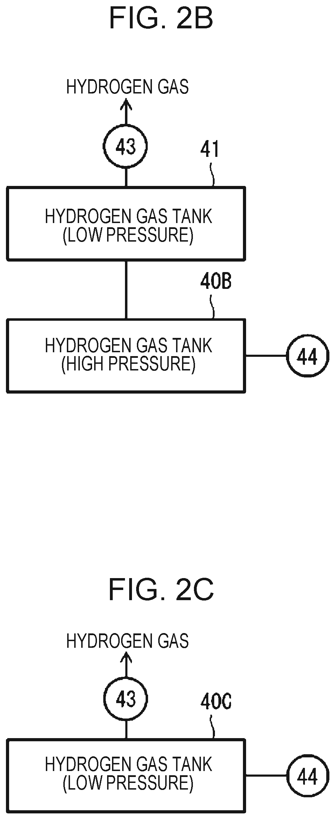

As illustrated in Fig. 2B, in some cases, a hydrogen gas tank 40B that stores high-pressure hydrogen gas for hydrogen refill and the hydrogen gas tank 41 that stores, in the form of low-pressure hydrogen gas, the high-pressure hydrogen gas in the hydrogen gas tank 40B are provided as a hydrogen supply source for the fuel cell device 15. In this case, since the hydrogen gas tank 40B corresponds to the "hydrogen tank" of the present disclosure, the remaining amount of hydrogen in hydrogen gas tank 40B may be calculated by the controller 23 from the measurement data of a pressure meter 44 provided in the hydrogen gas tank 40B, for example. Alternatively, the remaining amount of hydrogen in hydrogen gas tank 40B may be calculated by the controller 23 from the measurement data of the flowmeter 43 provided in a hydrogen gas path for supplying hydrogen gas from the hydrogen gas tank 41 to the fuel cell device 15. The measurement data of the pressure meter 44 or the flowmeter 43 may be transmitted to the controller 23 via a controller (not illustrated) provided in the fuel cell device 15 or may be transmitted directly to the controller 23. The controller (not illustrated) provided in the fuel cell device 15 corresponds to the control unit 30A or the like described below.

As illustrated in Fig. 2C, in some cases, a hydrogen gas tank 40C that stores low-pressure hydrogen gas for hydrogen refill may be provided as a hydrogen supply source for the fuel cell device 15. In this case, since the hydrogen gas tank 40C corresponds to the "hydrogen tank" of the present disclosure, the remaining amount of hydrogen in the hydrogen gas tank 40C may be calculated by the controller 23 from, for example, the measurement data of the pressure meter 44 provided in the hydrogen gas tank 40C. Alternatively, the remaining amount of hydrogen in hydrogen gas tank 40C may be calculated by a controller 23 from the measurement data of flowmeter 43 provided in the hydrogen gas path for supplying hydrogen gas from the hydrogen gas tank 40C to the fuel cell device 15. The measurement data of the pressure meter 44 or the flowmeter 43 may be transmitted to the controller 23 via a controller (not illustrated) provided in the fuel cell device 15 or may be transmitted directly to the controller 23. The controller (not illustrated) provided in the fuel cell device 15 corresponds to the control unit 30A or the like described below.

The above-described configurations of the hydrogen supply source of the fuel cell device 15 are only examples, and the configuration is not limited thereto. The hydrogen supply source may be configured such that the hydrogen gas tank having a low remaining amount of hydrogen can be replaced with a new hydrogen gas tank at an appropriate time.

[Operation]

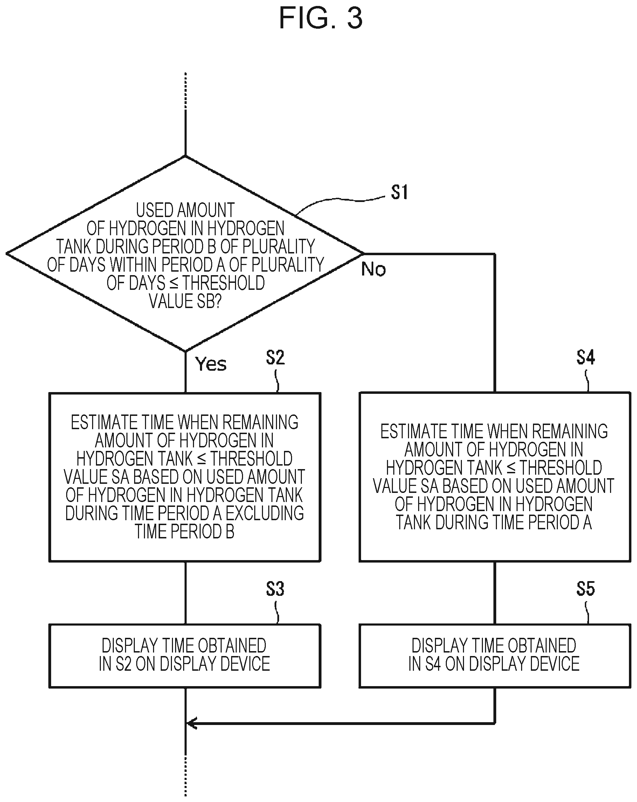

Fig. 3 is a flowchart of an example of the operations performed by the remaining amount estimation device for a hydrogen tank (a remaining amount estimation method for a hydrogen tank) according to the first embodiment. The operations described below may be performed by, for example, the arithmetic processing unit of the controller 23 that reads the control program from the storage unit of the controller 23. However, the operations described below are not necessarily performed by the controller 23. Some of the operations can be performed by an operator. In the examples described below, control of the operations is performed by the controller 23.

At a predetermined timing, a configuration file previously stored in the storage unit of the controller 23 is read into the arithmetic processing unit of the controller 23. The "predetermined timing" may be set to, but not limited to, at least once a week, for example. The "configuration file" stores, for example, the time period A and time period B preset by the user, and the type of hydrogen tank 40 (for example, a hydrogen gas tank or a liquid hydrogen tank). Data, such as the used amount of hydrogen in the hydrogen tank 40 during each of the time periods A and B is then retrieved from the storage unit of the controller 23.

After the above-described operations are performed, it is determined in step S1 whether the used amount of hydrogen in the hydrogen tank 40 during the time period B of a plurality of days within the time period A of a plurality of days is less than or equal to the threshold value SB.

The determination as to "whether the used amount of hydrogen in the hydrogen tank 40 during the time period B is less than or equal to the threshold value SB" made in step S1 is not limited to the determination made by comparing the total hydrogen usage of the hydrogen tank 40 during the time period B with the threshold value SB. For example, the "determination" in step S1 may be made by comparing the average value of the hydrogen usage of the hydrogen tank 40 during the time period B (for example, the average daily hydrogen usage) with the threshold value SB determined for the average value of the hydrogen usage of the hydrogen tank 40 during the time period B. Alternatively, the "determination" in step S1 may be made by comparing the average power generation output of the fuel cell unit, which is indirectly correlated to the hydrogen usage of the hydrogen tank 40 during the time period B, with the threshold value SB determined for the average power generation of the fuel cell unit during the time period B.

If the used amount of hydrogen in the hydrogen tank 40 during the time period B within the time period A is less than or equal to the threshold value SB ("Yes" in step S1), the time when the remaining amount of hydrogen in a hydrogen tank falls to the threshold value SA or below is estimated in step S2 based on the used amount of hydrogen in the hydrogen tank 40 during the time period A excluding the time period B.

Subsequently, in step S3, the information regarding the time when the remaining amount of hydrogen in the hydrogen tank 40 falls to the threshold value SA or below that is estimated in step S2 is notified to the display device 50 by the communicator 21. The time when the remaining amount of hydrogen in the hydrogen tank 40 falls to the threshold value SA or below may be provided to the user as the information in the year-month-day format on a calendar displayed on the display device 50. If the time when the remaining amount of hydrogen in the hydrogen tank 40 falls to the threshold value SA or below is stored in the storage unit of the controller 23, the stored time may be updated with new data. Thereafter, at the next predetermined timing, the operations in step S1 and the subsequent steps are performed again.

However, if the used amount of hydrogen in the hydrogen tank 40 during the time period B within the time period A is greater than the threshold value SB ("No" in step S1), the time when the remaining amount of hydrogen in a hydrogen tank falls to the threshold value SA or below is estimated in step S4 based on the used amount of hydrogen in the hydrogen tank during the time period A.

Subsequently, in step S5, the information regarding the time when the remaining amount of hydrogen in the hydrogen tank 40 falls to the threshold value SA or below that is estimated in step S4 is notified to the display device 50 by the communicator 21. The time when the remaining amount of hydrogen in the hydrogen tank 40 falls to the threshold value SA or below may be provided to the user as the information in, for example, the year-month-day format on a calendar displayed on the display device 50. If the time when the remaining amount of hydrogen in the hydrogen tank 40 falls to the threshold value SA or below is stored in the storage unit of the controller 23, the stored time may be updated with new data. Thereafter, at the next predetermined timing, the operations in step S1 and the subsequent steps are performed again.

According to the present embodiment described above, it is possible to estimate the time when the remaining amount of hydrogen in the hydrogen tank 40 used in the fuel cell device 15 falls to the threshold value SA or below more accurately than before.

More specifically, excluding, from the calculation of hydrogen usage, data obtained during the time period B during which the hydrogen usage of the hydrogen tank 40 is irregularly low as compared with normal hydrogen usage over a plurality of days can result in a more appropriate calculation of hydrogen usage than when the data is not excluded. Therefore, according to the present embodiment, by estimating the time when the remaining amount of hydrogen in the hydrogen tank 40 falls to the threshold value SA or below based on the used amount of hydrogen in the hydrogen tank 40 during the time period A excluding the time period B, the accuracy of the estimation can be improved as compared with the case where such excluded period is not provided in calculation of hydrogen usage. This allows the user to refill the hydrogen tank 40 or replace the hydrogen tank 40 in use with a new hydrogen tank in a timely manner.

In addition, according to the present embodiment, by setting each of the time period A and the time period B to a plurality of consecutive days, estimation of the time when the remaining amount of hydrogen in a hydrogen tank 40 falls to the threshold value SA or below is less affected by the fluctuation in hydrogen usage in daily activities. For example, in general, the amount of hydrogen used on a specific day, such as a holiday, is lower than that on a weekday. According to the present embodiment, by setting each of the time period A and the time period B in the above-described manner, the influence of fluctuation in daily hydrogen usage is reduced in the estimation of the time when the remaining amount of hydrogen in the hydrogen tank 40 falls to the threshold value SA or below.

(First Example)

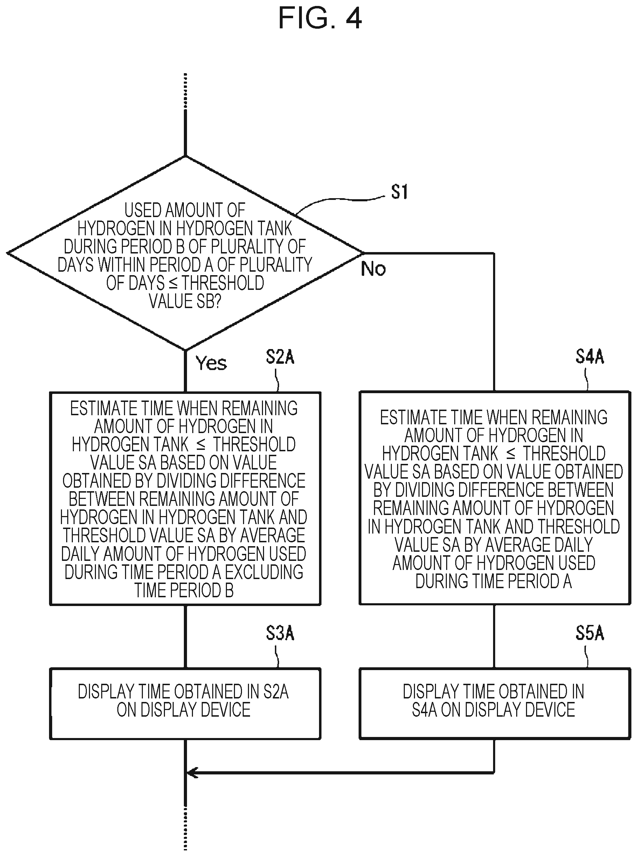

Fig. 4 is a flowchart illustrating an example of the operation performed by the remaining amount estimation device for a hydrogen tank (the remaining amount estimation method for a hydrogen tank) according to a first example of the first embodiment. The operations described below may be performed by, for example, the arithmetic processing unit of the controller 23 that reads the control program from the storage unit of the controller 23. However, the operations described below is not necessarily performed by the controller 23. Some of the operations can be performed by an operator. In the example described below, control of the operations is performed by the controller 23.

Step S1 in Fig. 4 is the same as step S1 in Fig. 3 and, thus, detailed description of step S1 is omitted.

If the used amount of hydrogen in the hydrogen tank 40 during the time period B within the time period A is less than or equal to threshold value SB ("Yes" in step S1), the time when the remaining amount of hydrogen in the hydrogen tank 40 falls to the threshold value SA or below is estimated in step S2A based on the value obtained by dividing the difference between the remaining amount of hydrogen in the hydrogen tank 40 and the threshold value SA by the average daily amount of hydrogen used during the time period A excluding the time period B.

For example, the average daily amount q1 of hydrogen used during the time period A excluding the time period B (hereinafter referred to as an "average hydrogen usage q1") is calculated by the following Equation (1):

q1 [Nm$^3$ (normal cubic meter)/day] = (total amount of hydrogen used during time period A excluding time period B)/(number of days in time period A - number of days in time period B) ... (1).    (1).

Furthermore, a difference Q1 between the amount of hydrogen present in the hydrogen tank 40 and the amount of hydrogen corresponding to the threshold value SA can be obtained from the measurement data of, for example, the pressure meter 44 by using the following Equation (2):

Q1 [Nm$^3$] = (current measurement data [MPa] of pressure meter 44 - threshold value SA [MPa]) $\times$ "predetermined coefficient" ... (2).    (2).

Herein, the "predetermined coefficient" is a numerical value that is preset by the user and that is proportional to the size (volume) of the hydrogen tank 40 and is an appropriate value for converting the counting data from a sensor into the remaining amount of hydrogen in the hydrogen tank 40 (normal cubic meter).

Then, the number of days T1 until the remaining amount of hydrogen in the hydrogen tank 40 reaches the threshold value SA is estimated by using the following Equation (3):

$$T1 \text{ [days]} = Q1/q1 \ ... (3).$$

As described above, the time when the remaining amount of hydrogen in the hydrogen tank 40 falls to the threshold value SA or below can be estimated from the number of days T1 described above.

Subsequently, in step S3A, the information regarding the time when the remaining amount of hydrogen in the hydrogen tank 40 falls to the threshold value SA or below that is estimated in step S2A is notified to the display device 50 by the communicator 21. The time when the remaining amount of hydrogen in the hydrogen tank 40 falls to the threshold value SA or below may be provided to the user as, for example, the information in the year-month-day format on a calendar displayed on the display device 50. If the time when the remaining amount of hydrogen in the hydrogen tank 40 falls to the threshold value SA or below is stored in the storage unit of the controller 23, the stored time may be updated with new data. Thereafter, at the next predetermined timing, the operations in step S1 and the subsequent steps are performed again.

However, if the used amount of hydrogen in the hydrogen tank 40 during the time period B within the time period A is greater than the threshold value SB ("No" in step S1), the time when the remaining amount of hydrogen in the hydrogen tank 40 falls to the threshold value SA or below is estimated in step S4A based on a value obtained by dividing the difference between the remaining amount of hydrogen in the hydrogen tank 40 and the threshold value SA by the average daily amount of hydrogen used during the time period A.

For example, the average daily amount of hydrogen q2 used during the time period A (hereinafter referred to as an "average hydrogen usage q2") is calculated by the following Equation (4):

q2 [Nm$^3$ (normal cubic meter)/day] = (total amount of hydrogen used in time period A)/(number of days in time period A) ... (4).

$$(4).$$

Furthermore, a difference Q2 between the amount of hydrogen present in the hydrogen tank 40 and the amount of hydrogen corresponding to the threshold value SA can be obtained from the measurement data of, for example, the pressure meter 44 by using the following Equation (5):

Q2 [Nm$^3$] = (current measurement data [MPa] of pressure meter 44 - threshold value SA [MPa]) × "predetermined coefficient" ... (5).

$$(5).$$

Herein, the "predetermined coefficient" is a numerical value that is preset by the user and that is proportional to the size (volume) of the hydrogen tank 40 and is an appropriate value for converting the counting data from a sensor into the remaining amount of hydrogen in the hydrogen tank 40 (normal cubic meter).

Then, the number of days T2 until the remaining amount of hydrogen in the hydrogen tank 40 reaches the threshold value SA is estimated by using the following Equation (6):

$$T2 \text{ [days]} = Q2/q2 \ ... \ (6).$$

As described above, the time when the remaining amount of hydrogen in the hydrogen tank 40 falls to the threshold value SA or below can be estimated from the number of days T2 described above.

Subsequently, in step S5A, the information regarding the time when the remaining amount of hydrogen in the hydrogen tank 40 falls to the threshold value SA or below that is estimated in step S4A is notified to the display device 50 by the communicator 21. The time when the remaining amount of hydrogen in the hydrogen tank 40 falls to the threshold value SA or below may be provided to the user as, for example, the information in the year-month-day format on a calendar displayed on the display device 50. If the time when the remaining amount of hydrogen in the hydrogen tank 40 falls to the threshold value SA or below is stored in the storage unit of the controller 23, the stored time may be updated with new data. Thereafter, at the next predetermined timing, the operations in step S1 and the subsequent steps are performed again.

According to the present example described above, by estimating the time when the remaining amount of hydrogen in the hydrogen tank 40 falls to the threshold value SA or below based on the value obtained by dividing the difference between the remaining amount of hydrogen in the hydrogen tank 40 and the threshold value SA by the average daily amount of hydrogen used during the time period A excluding the time period B, the accuracy of the estimation can be improved as compared with the case where such excluded period is not provided in calculation of hydrogen usage.

The remaining amount estimation method for the hydrogen tank 40, the remaining amount estimation device 20 for the hydrogen tank 40, and the power generation system 10 according to the present example may be similar to those according to the first embodiment, except for the features described above.

(Second Example)

The remaining amount estimation method for the hydrogen tank 40 according to the second example of the first embodiment is similar to the remaining amount estimation method for the hydrogen tank 40 according to the first embodiment, except that the time period A is one or more weeks, and the time period B is a week (weeks) less than or equal to the time period A.

According to the present example described above, by setting the time period A and the time period B to one or more weeks and a week (weeks) less than or equal to the first time period, respectively, the estimation of the time when the remaining amount of hydrogen in the hydrogen tank 40 falls to the threshold value SA or below is less affected by fluctuation in hydrogen usage in daily activities. For example, in general, the amount of hydrogen used during a specific time period in a week, such as a weekend (Saturday and Sunday), is lower than that on weekdays. According to the present example, by setting the time period A and the time period B in the above-described manner, the influence of fluctuation in weekly everyday hydrogen usage is reduced in estimation of the time when the remaining amount of hydrogen in the hydrogen tank 40 falls to the threshold value SA or below.

The remaining amount estimation method for the hydrogen tank 40, the remaining amount estimation device 20 for the hydrogen tank 40, and the power generation system 10 according to the present example may be similar to those according to the first embodiment or the first example of the first embodiment, except for the features described above.

(Modification)

The remaining amount estimation method for a hydrogen tank 40 according to the modification of the first embodiment is similar to the remaining amount estimation method for the hydrogen tank 40 according to the first embodiment, except that when the time period A and the time period B are the same, the time when the remaining amount of hydrogen in the hydrogen tank 40 falls to the threshold value SA or below is not updated.

The statement "the time period A and the time period B are the same" means that the hydrogen usage of the hydrogen tank 40 during the entire time period A is irregularly less than the normal hydrogen usage. Therefore, according to the present modification described above, when the time period A and the time period B are the same, the time estimating operation can be performed more efficiently by not updating the time when the remaining amount of hydrogen in the hydrogen tank 40 used in the fuel cell device 15 falls to the threshold value SA or below.

The remaining amount estimation method for the hydrogen tank 40, the remaining amount estimation device 20 for the hydrogen tank 40, and the power generation system 10 according to the present modification may be similar to those according to any one of the first embodiment and the first and second examples of the first embodiment, except for the features described above.

(Second Embodiment)

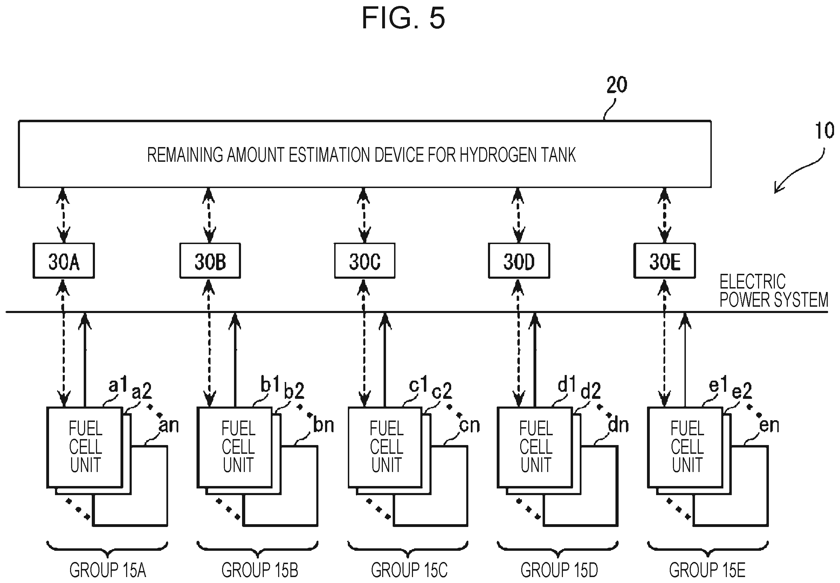

Fig. 5 illustrates an example of a power generation system according to the second embodiment. For convenience of description, the hydrogen tank 40 and the display device 50 according to the first embodiment (Fig. 1) are not illustrated in Fig. 5. The inner configuration of the remaining amount estimation device 20 for the hydrogen tank 40 is the same as that according to the first embodiment and, thus, detailed description of the inner configuration is omitted.

As illustrated in Fig. 5, the power generation system 10 according to the present embodiment includes groups 15A to 15E, which are provided by dividing fuel cell unit groups corresponding to the fuel cell device 15 (refer to Fig. 1), a remaining amount estimation device 20 for a hydrogen tank 40, and control units 30A to 30E. That is, the power generation system 10 includes fuel cell unit groups each consisting of a plurality of fuel cell units.

Although not illustrated, each of the fuel cell units includes a fuel cell stack, a DC-AC converter device for converting the DC power generated by the fuel cell stack into AC power and outputting the AC power to an electric power system, and a control unit for controlling the operations performed by the devices.

In the example illustrated in Fig. 5, the fuel cell unit groups are formed by fuel cell units a1 to an that belong to a group 15A, fuel cell units b1 to bn that belong to a group 15B, fuel cell units c1 to cn that belong to a group 15C, fuel cell units d1 to dn that belong to a group 15D, and fuel cell units e1 to en that belong to a group 15E. All of the fuel cell units that belong to one group are also simply referred to as a "fuel cell unit in the group".

However, the above-described configuration of fuel cell unit groups is only an example and is not limited thereto. For example, the fuel cell unit groups may be formed by fuel cell units that belong to a single group. The number of fuel cell units in a group may be one.

The control units 30A to 30E are provided for the fuel cell units a1 to an in the group 15A, the fuel cell units b1 to bn in the group 15B, the fuel cell units c1 to cn in the group 15C, the fuel cell units d1 to dn in the group 15D, and the fuel cell units e1 to en in the group 15E, respectively, and control the operations performed by the fuel cell units in the groups.

For example, the control unit 30A controls the output of each of the fuel cell units a1 to an via a communication network so that the fuel cell units a1 to an in the group 15A can operate efficiently (for example, the lifetimes are optimized).

Any control unit having a control function can be used as each of the control units 30A to 30E. Each of the control units 30A to 30E includes an arithmetic processing unit (not illustrated), a storage unit that stores a control program, and a communicator. The arithmetic processing unit reads and executes the control program stored in the storage unit and, thus, performs predetermined control in the control units 30A to 30E. For example, a microprocessor is used as the arithmetic processing unit. For example, a memory is used as the storage unit.

The above configuration of the power generation system 10 is only an example and is not limited thereto.

For example, the fuel cell units may not include the control units, and the operations performed by the fuel cell units that belong to each of the groups may be directly controlled by one of the control units 30A to 30E.

The controller 23 (refer to Fig. 1) of the remaining amount estimation device 20 for the hydrogen tank 40 performs the operation to estimate the time when the remaining amount of hydrogen in the hydrogen tank 40 falls to the threshold value SA or below based on the amount of hydrogen in the hydrogen tank 40. However, the configuration is not limited thereto. A control unit other than the controller 23 (for example, each of the control units 30A to 30E) may perform the operation.

Furthermore, the remaining amount estimation device 20 for the hydrogen tank 40 may be integrated with the control units 30A to 30E, that is, may have the control functions of the control units 30A to 30E and directly control the operation performed by each of the fuel cell units in the group.

The remaining amount estimation method for the hydrogen tank 40, the remaining amount estimation device 20 for the hydrogen tank 40, and the power generation system 10 according to the present embodiment may be similar to those according to any one of the first embodiment, the first and second examples of the first embodiment, and the modification of the first embodiment, except for the features described above.

The first embodiment, the first and second example of the first embodiment, the modification of the first embodiment, and the second embodiment may be combined with one another as long as they do not exclude each other. From the above description, it will be appreciated by those skilled in the art that many improvements and other embodiments of the present disclosure could be made. Accordingly, the above description should be construed as an example only and is for the purpose of teaching those skilled in the art how best to practice the present disclosure. The details of the configuration and/or function can be substantially changed without departing from the spirit of the present disclosure.

Industrial Applicability

An aspect of the present disclosure can be used in a remaining amount estimation method for a hydrogen tank, a remaining amount estimation device for a hydrogen tank, and a power generation system that can estimate the time when the remaining amount of hydrogen in a hydrogen tank used in a fuel cell device falls to a predetermined amount or below more accurately than existing ones.

Reference Signs List

    10 power generation system
    15 fuel cell device
    20 remaining amount estimation device
    21 communicator
    23 controller
    30A control unit
    30B control unit
    30C control unit
    30D control unit
    30E control unit
    40 hydrogen tank
    40A liquid hydrogen tank
    40B hydrogen gas tank
    40C hydrogen gas tank
    41 hydrogen gas tank
    42 liquid level sensor
    43 flowmeter
    44 pressure meter
    50 display device
    SA threshold value
    SB threshold value
    a1 to an fuel cell unit
    b 1 to bn fuel cell unit
    c1 to cn fuel cell unit
    d1 to dn fuel cell unit
    e1 to en fuel cell unit

**Claims**

1. A remaining amount estimation method for a hydrogen tank used in a fuel cell device including at least one fuel cell unit, comprising:

    estimating a time when a remaining amount of hydrogen in the hydrogen tank falls to a first threshold value or below based on a used amount of hydrogen in the hydrogen tank during a first time period of a plurality of consecutive days; and

notifying a display device of the time,
wherein when a used amount of hydrogen in the hydrogen tank during a second time period of a plurality of consecutive days within the first time period is less than or equal to a second threshold value, the time is estimated based on a used amount of hydrogen in the hydrogen tank during the first time period excluding the second time period.

2. The remaining amount estimation method for a hydrogen tank according to claim 1, wherein if the first time period is the same as the second time period, the time is not updated.

3. The remaining amount estimation method for a hydrogen tank according to claim 1 or 2, wherein the time is estimated based on a value obtained by dividing a difference between the remaining amount of hydrogen in a hydrogen tank and a first threshold value by an average daily amount of hydrogen used during the first time period excluding the second time period.

4. The remaining amount estimation method for a hydrogen tank according to any one of claims 1 to 3, wherein the first time period is one or more weeks, and the second time period is one week or weeks less than or equal to the first time period.

5. A remaining amount estimation device for a hydrogen tank used in a fuel cell device including at least one fuel cell unit, comprising:

a controller that estimates a time when a remaining amount of hydrogen in the hydrogen tank falls to a first threshold value or below based on a used amount of hydrogen in the hydrogen tank during a first time period of a plurality of consecutive days; and
a communicator that is controlled by the controller and that notifies a display device of the time,
wherein when a used amount of hydrogen in the hydrogen tank during a second time period of a plurality of consecutive days within the first time period is less than or equal to a second threshold value, the controller estimates the time based on a used amount of hydrogen in the hydrogen tank during the first time period excluding the second time period.

6. A power generation system comprising:

a fuel cell device including at least one fuel cell unit; and
the remaining amount estimation device for a hydrogen tank according to claim 5.

# FIG. 1

REMAINING AMOUNT ESTIMATION DEVICE FOR HYDROGEN TANK — 20

COMMUNICATOR — 21

CONTROLLER — 23

DISPLAY DEVICE — 50

FUEL CELL DEVICE — 15

HYDROGEN TANK — 40

10

# FIG. 2A

HYDROGEN GAS

43

HYDROGEN GAS TANK (LOW PRESSURE) — 41

LIQUID HYDROGEN TANK — 40A

42

# FIG. 2B

HYDROGEN GAS

↑

(43)        41

HYDROGEN GAS TANK
(LOW PRESSURE)

40B

HYDROGEN GAS TANK
(HIGH PRESSURE)        (44)

# FIG. 2C

HYDROGEN GAS

↑

(43)        40C

HYDROGEN GAS TANK
(LOW PRESSURE)        (44)

# FIG. 3

```
                          ╱╲
                         ╱  ╲        ── S1
                        ╱    ╲
              USED AMOUNT
           OF HYDROGEN IN HYDROGEN
        TANK DURING PERIOD B OF PLURALITY
       OF DAYS WITHIN PERIOD A OF PLURALITY         No
         OF DAYS ≤ THRESHOLD
              VALUE SB?
                        ╲    ╱
                         ╲  ╱
                          ╲╱
               Yes    S2                              S4

    ┌─────────────────────────────┐      ┌─────────────────────────────┐
    │ ESTIMATE TIME WHEN REMAINING │      │ ESTIMATE TIME WHEN REMAINING │
    │   AMOUNT OF HYDROGEN IN       │      │   AMOUNT OF HYDROGEN IN       │
    │  HYDROGEN TANK ≤ THRESHOLD    │      │  HYDROGEN TANK ≤ THRESHOLD    │
    │ VALUE SA BASED ON USED AMOUNT │      │ VALUE SA BASED ON USED AMOUNT │
    │ OF HYDROGEN IN HYDROGEN TANK  │      │  OF HYDROGEN IN HYDROGEN      │
    │ DURING TIME PERIOD A EXCLUDING│      │  TANK DURING TIME PERIOD A    │
    │        TIME PERIOD B          │      │                               │
    └─────────────────────────────┘      └─────────────────────────────┘
                            S3                                    S5

    ┌─────────────────────────────┐      ┌─────────────────────────────┐
    │    DISPLAY TIME OBTAINED      │      │    DISPLAY TIME OBTAINED      │
    │    IN S2 ON DISPLAY DEVICE    │      │    IN S4 ON DISPLAY DEVICE    │
    └─────────────────────────────┘      └─────────────────────────────┘
```

16

# FIG. 4

# FIG. 5

EP 4 749 725 A1

## INTERNATIONAL SEARCH REPORT

| International application No. |
| --- |
| **PCT/JP2024/027071** |

**A. CLASSIFICATION OF SUBJECT MATTER**

*H01M 8/04*(2016.01)i; *H01M 8/04313*(2016.01)i; *F17C 13/02*(2006.01)n
FI: H01M8/04 Z; H01M8/04313; F17C13/02 301A

According to International Patent Classification (IPC) or to both national classification and IPC

**B. FIELDS SEARCHED**

Minimum documentation searched (classification system followed by classification symbols)

H01M8/04; H01M8/04313; F17C13/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2022-102929 A (NASU DENKI TEKKO KK) 07 July 2022 (2022-07-07) | 1-6 |
| A | JP 2020-128807 A (HONDA MOTOR CO., LTD.) 27 August 2020 (2020-08-27) | 1-6 |

☐ Further documents are listed in the continuation of Box C. ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **10 September 2024** | **17 September 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

International application No.

**PCT/JP2024/027071**

| Patent document cited in search report | | | Publication date (day/month/year) | Patent family member(s) | | | Publication date (day/month/year) |
|---|---|---|---|---|---|---|---|
| JP | 2022-102929 | A | 07 July 2022 | (Family: none) | | | |
| JP | 2020-128807 | A | 27 August 2020 | US | 2020/0259195 | A1 | |
| | | | | CN | 111550672 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020203520 A